# EUROPÄISCHE PATENTANMELDUNG

(11) **EP 0 665 266 A2**
(43) Veröffentlichungstag der Anmeldung: **02.08.1995**
(21) Anmeldenummer: 95100894.5
(22) Anmeldetag: 24.01.1995
(51) Int. Cl.: C08K 3/08, C08K 9/00

(54) **Verfahren zur Herstellung von Zusammensetzungen, enthaltend Metallpartikel im Nanometergrössenbereich**

(30) Priorität: 01.02.1994 DE 4402890
(71) Anmelder: BASF AKTIENGESELLSCHAFT, D-67056 Ludwigshafen (DE)
(72) Erfinder: Fisch, Herbert, Dr., D-67157 Wachenheim (DE); Haas, Karl-Heinz, Dr., D-68199 Mannheim (DE); Huckestein, Brigitta, Dr., D-67059 Ludwigshafen (DE)

(57) **Zusammenfassung**

Verfahren zur Herstellung von Zusammensetzungen, enthaltend
A) Metallpartikel eines mittleren Durchmessers kleiner als 100 nm, berechnet als Zahlenmittelwert, und
B) Polymere auf der Basis von Vinylacetat, Vinylamin, Vinylimidazol, Vinylpyrrolidon, Acrylamiden oder Acryliminen oder deren Mischungen,
bei dem Metallsalze zu Metallpartikeln A in Gegenwart eines Lösungsmittels und darin gelösten Polymeren B reduziert werden, dadurch gekennzeichnet, daß man das Reaktionsgemisch sprühtrocknet.

## Beschreibung

Die vorliegende Erfindung betrifft ein Verfahren zur Herstellung von Zusammensetzungen, die
A) Metallpartikel eines mittleren Durchmessers kleiner als 100 nm, berechnet als Zahlenmittelwert, und
B) Polymere auf der Basis von Vinylacetat, Vinylamin, Vinylimidazol, Vinylpyrrolidon, Acrylamiden oder Acryliminen oder deren Mischungen,
enthalten, bei dem Metallsalze zu Metallpartikeln A in Gegenwart eines Lösungsmittels und darin gelösten Polymeren B reduziert werden.

Sehr feine Metallpartikel, in denen die Metalle in der Oxidationsstufe Null vorliegen und die eine sehr enge Größenverteilung aufweisen, sind für viele Anwendungen, beispielsweise der Elektronik oder der Katalyse von Interesse.

Es war bereits bekannt, daß sich kolloidal gelöste Silber-, Gold- oder Kupferpartikel durch Reduktion entsprechender gelöster Salze herstellen und mittels Polymeren wie Polyvinylpyrrolidon oder deren Copolymeren mit Vinylalkohol stabilisieren lassen (s. Esumi et al., J. Applied Polymer Science (44), 1003 (1992); Hirai et al., Chem. Soc. Jap. (59), 367 (1986); Kunz et al., J. Colloid and Interface Science (156), 240 (1993)). Es wurden sowohl die kolloidalen Systeme selbst als auch daraus erhältliche Filme untersucht (siehe Kunz et al. und Hirai et al.). Allerdings geben diese wissenschaftlichen Arbeiten keine Hinweise auf die Herstellung derartiger Zusammensetzungen im technischen Maßstab.

Die Handhabe der kolloidalen Systeme wäre zum einen nicht wirtschaftlich; zum anderen haben sich diese Systeme als nicht langzeitstabil erwiesen. Die bekannten Filme genügen vielen anwendungstechnischen Anforderungen nicht.

Aufgabe der vorliegenden Erfindung war es deshalb, ein Verfahren zur Herstellung von Zusammensetzungen, die Metallpartikel im Nanometergrößenbereich enthalten, zur Verfügung zu stellen, das sich auch großtechnisch anwenden läßt. Ferner war es Aufgabe der vorliegenden Erfindung, diese Zusammensetzungen in einer Form zur Verfügung zu stellen, die es ermöglicht, die Zusammensetzungen leicht zu handhaben und vielseitig zu verwenden.

Diese Aufgabe wurde durch ein Verfahren, wie eingangs beschrieben, gelöst, das sich dadurch auszeichnet, daß man die Reaktionsmischung sprühtrocknet.

Als Komponente A enthalten die Zusammensetzungen Metallpartikel, die einen mittleren Durchmesser (Zahlenmittelwert) von weniger als 100 nm haben. Bevorzugt sind solche, die Metallpartikel mit einem mittleren Durchmesser (Zahlenmittelwert) von weniger als 70 nm, insbesondere weniger als 50 nm enthalten. Im allgemeinen weisen die Metallpartikel mittlere Durchmesser (Zahlenmittelwert) von 8 bis 30 nm auf. Die mittleren Durchmesser können aber auch geringfügig darunter liegen, beispielsweise bis 3 nm.

Im allgemeinen ist die Größenverteilung der Metallpartikel sehr eng. Bevorzugt werden monodisperse oder annähernd monodisperse Metallpartikel.

Als Metalle kommen prinzipiell alle Metalle in Betracht. Allerdings werden Übergangsmetalle bevorzugt. Besonders bevorzugt werden Übergangsmetalle der achten bis elften Gruppe des Periodensystems (IUPAC Bezeichnung 1985). Darunter sind insbesondere Eisen, Rhenium, Iridium, Palladium, Platin, Silber und Gold zu nennen. Selbstverständlich können auch Mischungen unterschiedlicher Metalle in den Zusammensetzungen enthalten sein.

Die Metallpartikel können z.B. dadurch erhalten werden, daß Metallsalze zu Metall der Oxidationsstufe Null reduziert werden. Die Reduktion wird in Lösung ausgeführt, so daß insbesondere lösliche Metallsalze zur Herstellung der Metallpartikel verwendet werden. Darunter werden lösliche Nitrate, Halogenide oder Acetate bevorzugt. Besonders bevorzugt werden Nitrate und Chloride eingesetzt. Beispiele geeigneter Metallsalze sind AgNO₃, HAuCl₄, H₂PtCl₆, RhCl₆ oder PdCl₆. Es ist auch möglich, Mischungen unterschiedlicher Metallsalze einzusetzen, wodurch legierungsartige Metallpartikel erhalten werden können.

Als Lösungsmittel können beispielsweise Wasser, Alkohole, wie Methanol, Ethanol, n-Propanol, i-Propanol, n-Butanol, i-Butanol oder Amylalkohol, worunter Ethanol bevorzugt wird, oder Mischungen unterschiedlicher Lösungsmittel, insbesondere Mischungen von Wasser und Ethanol, verwendet werden.

Bevorzugt wird die Reduktion auf chemischem Wege durchgeführt. Dabei eignen sich anorganische ebenso wie organische Reduktionsmittel. Formaldehyd, Natriumcitrat, Hydrazin oder Harnstoff sind Beispiele geeigneter Reduktionsmittel. Es können auch z.B. Borverbindungen, insbesondere Borhydride wie Natrium- oder Lithiumborhydrid zur Reduktion der Metalle verwendet werden. Ganz besonders bevorzugt wird Natriumborhydrid.

Im allgemeinen werden Reduktionsmittel und Metall in etwa stöchiometrischen Mengen eingesetzt.

Die Reduktion erfolgt im allgemeinen bei Raumtemperatur, kann aber auch bei etwas niedrigeren Temperaturen, beispielsweise bis 10°C oder bei etwas erhöhten Temperaturen z.B. bis 40°C ausgeführt werden. Die Temperatur kann aber auch bis zur Rückflußtemperatur des jeweiligen Lösungsmittels betragen. Besonders bevorzugt werden die Reduktion bei Temperaturen von 60 bis 90°C, insbesondere 75 bis 85°C ausgeführt. Die Reaktionsdauer kann von 2 bis 8 Stunden betragen. Im allgemeinen beträgt sie 2 bis 5 Stunden.

In der Regel findet die Reduktion ohne Zugabe einer Säure oder Base und in Gegenwart eines Polymeren B statt. Der Gesamtfeststoffgehalt der Reduktionslösung beträgt im allgemeinen von 10 bis 40 Gew.-%, bevorzugt von 15 bis 30 Gew.-% insbesondere von 15 bis 25 Gew.-%.

Bevorzugte Zusammensetzungen enthalten von 0,5 bis 50 Gew.-% Metallpartikel. Besonders bevorzugte erfindungsgemäße Zusammensetzungen enthalten von 1 bis 30, insbesondere von 5 bis 20 Gew.-% Metallpartikel.

Als weitere Komponente B enthalten die Zusammensetzungen Polymere auf der Basis von Vinylacetat, Vinylamin, Vinylimidazol oder Vinylpyrrolidon. Daneben kommen auch Polymere auf der Basis von Acrylamiden wie Acrylamid oder Alkylacrylamiden, bevorzugt Methacrylamid in Betracht. Ebenso können Polymere auf der Basis von Acrylimiden, z.B. Acrylimid oder Alkylacrylimiden, bevorzugt Methacrylimid als Komponente B eingesetzt werden.

Es können auch statistische oder Blockcopolymere sowie Mischungen unterschiedlicher Polymere B in den Zusammensetzungen enthalten sein. Ganz besonders bevorzugt werden Polyvinylpyrrolidon sowie Copolymere auf der Basis von Monomeren, ausgewählt aus der Gruppe N-Vinylpyrrolidon, N-Vinylimidazol und Vinylacetat. Besonders bevorzugt werden Polymere auf der Basis von N-Vinylpyrrolidon und Vinylacetat.

Die Polymeren sind an sich bekannt und weisen im allgemeinen Molekulargewichte (Gewichtsmittelwert) von 20 000 bis 1 500 000, bevorzugt 40 000 bis 1 200 000 auf. Die Herstellung dieser Polymeren ist ebenfalls an sich bekannt, bzw. es können diese Polymeren nach an sich bekannten Methoden hergestellt werden, so daß an dieser Stelle nur auf die einschlägige Literatur verwiesen wird.

Im allgemeinen beträgt der Anteil der Komponente B in den Zusammensetzungen von 50 bis 99,5 Gew.-%, bevorzugt von 70 bis 99 Gew.-%. Ganz besonders bevorzugte Zusammensetzungen enthalten von 80 bis 95 Gew.-% Polymere B.

Neben den wesentlichen Komponenten können die Zusammensetzung noch z.B. bis zu 20 Gew.-% weiterer Additive wie Sprühhilfsmittel oder andere Füllstoffe wie Fe₂O₃ oder Fe₃O₄ enthalten.

Die Sprühtrocknung der Zusammensetzungen erfolgt durch Zerstäuben der Reduktionsmischung in ein inertes Gas. Entweder kann die Zerstäubungstemperatur so gewählt werden, daß die Lösung die für die Zerstäubung geeignete Viskosität besitzt, oder der Feststoffgehalt der Lösung kann so gewählt werden, daß die Lösung die geeignete Viskosität bei einer bestimmten Zerstäubungstemperatur hat, wobei letzteres bevorzugt wird. Im allgemeinen werden Lösungen von Raumtemperatur zerstäubt.

Zur Zerstäubung können Zerstäuber wie Druckdüsen, pneumatische Zerstäuber, Rotationszerstäuber oder Ultraschallzerstäuber verwendet werden. Darunter werden Mehrstoffdüsen besonders bevorzugt.

Nach der Zerstäubung können die Flüssigkeitströpfchen in einer Trockenkammer beispielsweise in einem Sprühturm bekannter Bauart getrocknet werden (s. z.B. K. Masters: Spray Drying Handbook, Leonhard Hill Books, London, 1972). Die zur Lösungsmittelverdampfung erforderliche Wärme wird dabei bevorzugt am Kopf des Turmes durch ein inertes Trocknungsgas zugeführt. Als Trocknungsgas eignet sich vor allem Stickstoff. Es können aber auch andere Gase wie Kohlendioxid verwendet werden. Die Gastemperatur am Kopf des Trockenturms ist vorzugsweise größer als die Verdampfungstemperatur des Lösungsmittels. Im allgemeinen beträgt sie 100°C oder mehr. Bevorzugt liegt sie im Bereich von 110°C bis 120°C.

Vorzugsweise strömt das Trocknungsgas zusammen mit den Flüssigkeitströpfchen durch den Trockenturm und wird am Ausgang des Turmes zusammen mit dem Trockengut abgesaugt. Die Gastemperatur am Ausgang des Turmes hängt von dem gewünschten Restlösungsmittelgehalt des Pulvers ab. In der Regel beträgt sie 60°C oder mehr, beispielsweise bis zu 70°C. Im allgemeinen sind Temperaturen größer als 75°C nicht erforderlich.

Das Pulver kann im allgemeinen wie üblich durch Filter oder Zyklone von dem Gasstrom getrennt werden. Für die Herstellung der erfindungsgemäßen Pulver werden bevorzugt Zyklone zur Feststoffabtrennung verwendet.

Der Restlösungsmittelgehalt des erfindungsgemäßen Pulvers beträgt ohne Nachtrocknung im allgemeinen nicht mehr als 3 Gew.-%. Um den Gehalt an Restlösungsmittel weiter zu verringern, kann der Sprühtrocknung eine Nachtrocknung, die mit einer Nachkühlung kombiniert sein kann, nachgeschaltet sein. Die Nachtrocknung kann beispielsweise in einem Wirbelbett oder Fließbett erfolgen.

Bei der Sprühtrocknung ist es möglich, Sprühhilfsmittel mitzuverwenden. Als Sprühhilfsmittel sind beispielsweise zu nennen. Cellulosederivate wie Methylcellulose, Hydroxypropylcellulose, Hydroxyethylcellulose, Hydroxypropylmethylcellulose, Carboxymethylcellulose-Natrium (in allen Pharmakopöen beschrieben), Polyvinylpyrrolidone (aufgeführt z.B. in der USP/NF XVI), Copolymer aus N-Vinylpyrrolidon und Vinylacetat im Gewichtsverhältnis 60:40 (DAB-Monographie "Copolyvidon"), Stärkederivate (modifizierte Stärken nach dem Lebensmittel- und Bedarfsmittelgesetz) sowie Polyvinylalkohole (besonders gereinigte Qualitäten zur pharmazeutischen Technologie, mittlere Molmassen von 30 000 bis 200 000). Die Sprühhilfsmittel werden in der Regel in Mengen von 0 bis 20 Gew.-%, insbesondere 5 bis 15 Gew.-%, bezogen auf die Zusammensetzungen, angewandt.

Die nach dem erfindungsgemäßen Verfahren erhältlichen erfindungsgemäßen Pulver weisen im allgemeinen eine durchschnittliche Partikelgröße (Zahlenmittelwert) von 10 bis 100 µm, bevorzugt von 15 bis 75 µm auf. Insbesondere beträgt die durchschnittliche Partikelgröße von 20 bis 50 µm.

Die erfindungsgemäßen Pulver eignen sich besonders zur Herstellung von Dispersionen. Bei dem Herstellen der Dispersionen lagern sich die Metallpartikel nicht zu größeren Metallagglomeraten zusammen, sondern behalten ihre ursprünglichen mittleren Durchmesser im wesentlichen bei.

Als Lösungsmittel für die Herstellung der Dispersionen kommen insbesondere Alkohole in Betracht. Bevorzugt werden C₁-C₁₀-Alkylalkohole verwendet. Darunter sind Methanol, Ethanol, n-Propanol, Isopropanol, n-Butanol, 2-Ethyl-1-hexanol, Cyclohexanol, Methylcyclohexanol zu nennen. Es wird Ethanol besonders bevorzugt. Daneben können auch Glykole wie Ethylenglykol, 1,2-Propylenglykol, 1,3-Butandiol, 1,4-Butandiol, Methylisobutylcarbinol oder Glycerin verwendet werden. Weiterhin eignen sich chlorierte Kohlenwasserstoffe wie Methylenchlorid, Chloroform oder Ethylendichlorid. Die erfindungsgemäßen Pulver sind aber auch in Aminen wie Butylamin oder lactamhaltigen Lösungsmitteln z.B. n-Methylpyrrolidon, oder n-Vinylpyrrolidon gut dispergierbar.

Die erfindungsgemäßen Pulver eignen sich vor allem zur Herstellung von Beschichtungen, z.B. für Anwendungen, in denen der Oberflächenwiderstand der Beschichtung gering sein muß. Dies kann beispielsweise auf dem Gebiet der Elektronik oder Elektrotechnik der Fall sein. Ferner eignen sich die erfindungsgemäßen Pulver zur Herstellung von Lacken bzw. als Lackadditiv. Auch für Beschichtungen, die mittels Licht strukturiert werden können, können die erfindungsgemäßen Pulver eingesetzt werden.

Oberflächen können beispielsweise dadurch mit den erfindungsgemäßen Pulvern beschichtet werden, daß Lösungen oder Dispersionen der Pulver auf die entsprechende Oberfläche aufgebracht werden und das Lösungsmittel anschließend entfernt wird. Bevorzugt werden Oberflächen durch Spin-Coaten beschichtet.

Darüber hinaus können die erfindungsgemäßen Pulver zur Herstellung von Katalysatoren, z.B. für die Hydrierung, Dimerisierung oder auch Isomerisierung von ungesättigten Olefinen verwendet werden.

Die erfindungsgemäßen Dispersionen können beispielsweise in thermoplastische Kunststoffe eingearbeitet werden. Hierdurch werden thermoplastische Kunststoffe mit sehr fein verteilten Metallpartikeln erhalten. Auch hierbei bleibt die Partikelgröße der Metalle im wesentlichen erhalten. Ebenso ist es möglich, die erfindungsgemäßen Dispersionen mit wäßrigen Dispersionen anderer Polymerer zu mischen. Auch aus diesen Mischungen lassen sich Kunststoffe mit sehr fein verteilten Metallpartikeln im Nanometergrößenbereich herstellen. Diese Mischungen können aber ebensogut z.B. als Beschichtungsmittel verwendet werden. Die Metallpartikel-haltigen Kunststoffe können z.B. zur Abschirmung elektromagnetischer Wellen dienen. Die Leitfähigkeit der Kunststoffe kann beispielsweise dadurch beeinflußt werden, daß sie Metallpartikel unterschiedlicher Größe enthalten.

### Beispiele

Die Molekulargewichte wurden mittels Gelpermeationschromotographie bestimmt. Die Bestimmung der Partikelgröße erfolgte mittels Ultrazentrifugenmessungen. Die Teilchengröße und -verteilung wurden auch mit elektronenmikroskopischen Aufnahmen gemessen.

### Beispiel 1

4,5 g Polyvinylpyrrolidon (charakterisiert durch ein mittleres Molekulargewicht von Mₙ = 360 000 g/mol und M_{w} = 1,3 x 10⁶ g/mol, z.B. Kollidon K90, der Fa. BASF) und 1,25 g (7,3-10⁻³ mol) Silbernitrat wurden in 80 g Wasser bei 23°C gelöst. Es wurden 0,3 g (7,9-10⁻³ mol) Natriumborhydrid zugegeben. Man erhielt eine bräunliche Reduktionsmischung.

U.V. Spektren dieser Reduktionsmischung zeigten typische Ag-Absorptionsbanden bei 420 nm. Das Lösungsmittel wurde im Rotationsverdampfer abdestilliert. Anschließend wurde bei 80° im Vakuum getrocknet. Der so erhaltene Feststoff wurde gemahlen. Röntgenstreuaufnahmen bestätigten das Vorliegen von kristallinem Silber. Die Partikelgröße (Zahlenmittelwert) der Silberteilchen betrug 17 nm. Der Silbergehalt betrug, bezogen auf Polyvinylpyrrolidon 14,2 % (95,3 % d. T. h.)

### Beispiel 2

660 mg (1,68 mmol) HAuCl₄ x 3 H₂O und 3 g Polyvinylpyrrolidon (charakterisiert durch ein mittleres Molekulargewicht von M_{w} = 360 000 g/mol und Mₙ = 1,3 x 10⁶ g/mol, zum z.B. Kollidon K90, der Fa. BASF) wurde in 40 g H₂O gelöst. Die Reduktion erfolgte durch Zugabe von 1,23 g (4,19 mol) Natriumcitrat bei 80°C. Die Reaktionszeit betrug 3 Stunden. Es wurde eine rotbraune Reduktionsmischung erhalten.

U.V. Spektren dieser Reduktionsmischung zeigten typische Gold-Absorptionsbanden bei 520 nm. Die Lösung wurde wie oben getrocknet und gemahlen. Das so erhaltene Pulver zeigte die typischen Röntgen-Beugungslinien für kristallines Gold. Der Goldgehalt im Pulver betrug 9,7 g (98 % der Theorie). Die Partikelgröße (Zahlenmittelwert) des Goldes betrug 16 nm.

### Beispiel 3 - Sprühtrocknung

Die Reduktionsmischung aus Beispiel 1 wurde in einem Laborsprühtrockner (der Fa. Büchi) bei 150°C Kopftemperatur und einem Stickstoffstrom von 800 l pro Stunde getrocknet. Das Produkt wurde in einem Zyklon vom Gasstrom abgetrennt und in einem Auffangbehälter gesammelt. Man erhielt ein schwarzes, feinteiliges, leicht fließendes Pulver.

### Beispiel 4 - Dispergierung des Pulvers

3 g des gemäß Beispiel 3 sprühgetrockneten Pulvers wurden in 10 g Chloroform unter Rühren bei 25°C gelöst. Die erhaltene Lösung wurde mittels eines Spincoaters der Fa. Mikasa auf eine Rundscheibe (Durchmesser: 5 cm) zu einer Schicht mit 200 nm Schichtdicke verarbeitet. Die Aufgabe der Lösung erfolgte auf das ruhende Substrat, anschließend wurde die überstehende Lösung innerhalb von 30 Sekunden abgeschleudert. Die Umdrehungsgeschwindigkeit beim Beschichtungsvorgang lag bei 3000 Upm.

In Polyesterharz eingebettete Mikrotomschnitte des beschichteten Substrats zeigten Silberpartikel mit einer mittleren Teilchengröße (Zahlenmittelwert) von 18 nm.

### Beispiel 5 - Sprühtrocknung

Die Reduktionsmischung aus Beispiel 1 wurde in einem Laborsprühtrockner der Fa. Büchi bei 148°C Kopftemperatur und einem Stickstoffstrom von 490 l pro Stunde getrocknet. Man erhielt ein leicht violett gefärbtes, feinteiliges, leicht fließendes Pulver.

### Beispiel 6 - Redispergierung

3 g des gemäß Beispiel 5 sprühgetrockneten Pulvers wurden in 10 g Chloroform unter Rühren bei 25°C gelöst. Die erhaltene Lösung wurde mittels eines Spincoaters der Firma Mikasa auf eine Rundscheibe (Durchmesser: 5 cm) zu einer Schicht von 280 nm Schichtdicke verarbeitet. Die Aufgabe der Lösung erfolgte auf das ruhende Substrat. Anschließend wurde die überstehende Lösung innerhalb von 30 Sekunden abgeschleudert. Die Umdrehungsgeschwindigkeit beim Beschichtungsvorgang lag bei 3500 Upm.

In Polyesterharz eingebettete Mikrotomschnitte des beschichteten Substrates zeigten Silberpartikel mit einer mittleren Teilchengröße (Zahlenmittelwert) von 21 nm.

## Patentansprüche

1. Verfahren zur Herstellung von Zusammensetzungen, enthaltend
A) Metallpartikel eines mittleren Durchmessers von weniger als 100 nm, berechnet als Zahlenmittelwert, und
B) Polymere auf der Basis von Vinylacetat, Vinylamin, Vinylimidazol, Vinylpyrrolidon, Acrylamiden oder Acrylimiden oder deren Mischungen,
bei dem Metallsalze zu Metallpartikeln A in Gegenwart eines Lösungsmittels und darin gelösten Polymeren B reduziert werden, dadurch gekennzeichnet, daß man das Reaktionsgemisch sprühtrocknet.

2. Verfahren nach Anspruch 1, dadurch gekennzeichnet, daß man als Komponente A Silber oder Gold verwendet.

3. Verfahren nach einem der Ansprüche 1 oder 2, dadurch gekennzeichnet, daß man als Komponente B Polyvinylpyrrolidon oder Copolymere auf der Basis von Vinylpyrrolidon und Vinylacetat verwendet.

4. Pulver, erhältlich nach dem Verfahren gemäß einem der Ansprüche 1 bis 3.

5. Verfahren zur Herstellung von Dispersionen, dadurch gekennzeichnet, daß man Pulver gemäß Anspruch 4 in einem Dispersionsmittel dispergiert.

6. Verwendung der Pulver gemäß Anspruch 4 zur Herstellung von Katalysatoren.

7. Verwendung der Dispersionen gemäß Anspruch 5 zur Herstellung von Beschichtungen.

8. Katalysatoren, hergestellt unter Verwendung der Pulver gemäß Anspruch 4.

9. Beschichtungen, hergestellt unter Verwendung der Dispersionen gemäß Anspruch 5.

10. Verwendung der Pulver gemäß Anspruch 4 zum Herstellen von Folien oder Formkörpern.
